# FASCICULE DE BREVET EUROPEEN

(11) **EP 0 777 433 B1**
(45) Date de publication et mention de la délivrance du brevet: **23.09.1998**
(21) Numéro de dépôt: 95928524.8
(22) Date de dépôt: 17.08.1995
(51) Int. Cl.: A47J 37/12

(54) **APPAREIL DE CHAUFFE POUR ALIMENTS, EN PARTICULIER POUR LA REALISATION DE FRITURES, COMPORTANT UNE CONTRE-CUVE**
GERÄT ZUM ERWÄRMEN VON NAHRUNGSMITTELN, INSBESONDERE ZUM FRITIEREN, MIT EINEM ABSCHIRMBEHÄLTER
HEATING DEVICE FOR FOODSTUFFS, PARTICULARLY FOR FRYING, WITH AN OUTER BOWL

(30) Priorité: 17.08.1994 FR 9410189
(43) Date de publication de la demande: 11.06.1997
(73) Titulaire: SEB S.A., 69130 Ecully (FR)
(72) Inventeur: BEUGNOT, Bernard, F-21120 IS-sur-Tille (FR); BIZARD, Jean-Claude, F-21121 Fontaine-les-Dijon (FR); THEVENIN, Jean-Marie, F-21610 Bourberain (FR)
(86) Numéro de dépôt international: FR9501090
(87) Numéro de publication internationale: WO9604832

(56) Documents cités:
- EP-A- 0 295 159
- EP-A- 0 560 431
- FR-A- 1 510 977
- US-A- 2 725 460
- US-A- 3 508 485
- PATENT ABSTRACTS OF JAPAN vol. 14 no. 559 (C-787) ,12 Décembre 1990 & JP,A,02 239818 (HITACHI HEATING APPLIANCE CO LTD ET AL.) 21 Septembre 1990,

## Description

### DOMAINE TECHNIQUE

La présente invention se rapporte au domaine technique général des appareils de chauffe ou de cuisson d'aliments conçus pour la réalisation de fritures dans un bain d'huile en particulier.

La présente invention concerne un appareil de chauffe pour aliments, en particulier pour la réalisation de fritures dans un bain d'huile, comprenant une cuve montée amovible et entourée à distance par une jupe thermique, ainsi que des moyens de chauffe disposés sous la cuve et associés à des moyens de régulation thermique de la chauffe.

La présente invention concerne plus particulièrement mais non exclusivement une friteuse électrique destinée à la cuisson d'aliments tels que des frites, de la viande ou des poissons.

### TECHNIQUE ANTERIEURE

Il a déjà été proposé, par exemple dans le brevet Français FR-A-1 510 977 de réaliser des friteuses électriques comprenant une cuve amovible métallique montée en appui par son bord périphérique supérieur sur une jupe thermique formant la partie externe de la friteuse. Selon cette réalisation, les moyens de chauffe sont constitués d'une résistance blindée spiralée, fixée sur le socle de la friteuse en association avec un ensemble de réflecteurs thermiques. La friteuse est réalisée pour qu'en position d'appui sur la jupe thermique, la cuve soit maintenue à distance du moyen de chauffe qui assure donc un chauffage par rayonnement.

Un tel appareil bénéficie bien évidemment des avantages liés à l'amovibilité de la cuve tels que la facilité de nettoyage ou de manipulation, mais souffre d'inconvénients liés à la conception même de l'appareil. Ainsi il s'avère que le bilan thermique général de l'appareil n'est pas satisfaisant puisqu'une grande partie de l'énergie thermique est perdue ou dissipée dans des directions autres que celles de la cuve. Il s'ensuit une série d'échauffements localisés dans des zones inutiles. Par ailleurs l'absence d'une maîtrise thermique complète perturbe grandement le fonctionnement des moyens de régulation thermique, dans la mesure où ils sont soumis à une série d'influences thermiques diverses perturbant l'image thermique réelle de la cuve.

Pour pallier en partie les problèmes mentionnés précédemment il a déjà été proposé dans la demande de brevet EP-A-0 587 300 de réaliser une friteuse électrique dans laquelle les moyens de chauffe sont fixés à demeure sur la cuve amovible. Dans cette demande de brevet les moyens de chauffe sont constitués d'une résistance blindée sertie ou soudée sur la face externe du fond de la cuve amovible. La solution choisie dans cette demande de brevet permet de conserver les avantages fondamentaux des friteuses équipées d'une cuve amovible, tout en bénéficiant d'une bonne transmission thermique entre le moyen de chauffe et la cuve amovible. En revanche la solution choisie nécessite la mise au point d'un système de connexion électrique entre les cosses de la résistance blindée et le corps fixe de la friteuse. Un tel système de connexion, outre le fait qu'il constitue une contrainte sur le plan de la fabrication et un coût supplémentaire pour l'appareil, est susceptible à la suite d'une série de manipulations de la cuve amovible, de ne plus remplir parfaitement sa fonction de connexion. Enfin la présence d'éléments chauffants blindés sur la cuve amovible destinés à subir une série de lavages répétés risque de détériorer progressivement les éléments blindés et d'accélérer leur usure. Il n'est également pas exclu que de l'eau puisse pénétrer à l'intérieur même des éléments blindés par le biais de microfissures.

Il a certes déjà été envisagé, notamment dans le modèle d'utilité GM-90 17 621 9 ou dans la demande EP-0560431, ces deux documents étant du même demandeur et se référant au même appareil, de réaliser des friteuses électriques dont le moyen de chauffe est fixé sur le corps de l'appareil à distance du fond d'une cuve amovible. Pour améliorer le bilan thermique de ce mode de chauffe il a été envisagé de monter entre la jupe thermique et les parois de la cuve, un simple écran vertical formant réflecteur, entourant uniquement les parois latérales et verticales de la cuve. L'agencement choisi implique néanmoins le recours à des moyens de chauffe de type halogène associés à un fond de cuve à base de céramique afin de maîtriser le flux thermique. Une telle réalisation s'avère d'un coût de fabrication élevé dans la mesure où il nécessite le recours à des matériaux de coût unitaire élevé, et dans la mesure également où il implique le montage de nombreuses pièces pour le maintien de l'ensemble du système de chauffe sous la cuve amovible. Le système de chauffe n'est en conséquence pas monté fixe sur l'écran vertical formant réflecteur, mais est au contraire notamment supporté par un support principal et une série de pots en appui sur le bâti de la friteuse.

### EXPOSE DE L'INVENTION

L'objet assigné à l'invention vise en conséquence à porter remède aux différents inconvénients de l'art antérieur mentionné précédemment, et à proposer un nouvel appareil de chauffe pour aliments équipé d'une cuve amovible à usage polyvalent, ledit appareil étant de conception simplifiée, bon marché à fabriquer, et dans lequel le flux thermique et les aspects de sécurité de fonctionnement sont parfaitement maîtrisés.

Un autre objet de l'invention vise à proposer un appareil de chauffe pour aliments de conception simplifiée et dont l'échange thermique entre les moyens de chauffe et la cuve amovible est optimisé.

Un autre objet de l'invention vise à fournir un nouvel appareil de chauffe pour aliments dans lequel les pertes thermiques sont limitées et les risques d'échauffements également limités.

Un autre objet de l'invention est de fournir un appareil de chauffe pour aliments dans lequel les risques de débordement d'huile ou d'inflammation sont limités.

Un objet supplémentaire à l'invention est de fournir un appareil de chauffe pour aliments dans lequel la régulation thermique est assurée de manière fiable et précise.

Les objets assignés à l'invention sont atteints à l'aide d'une friteuse, comportant les caractéristiques de la revendication 1.

### DESCRIPTION SOMMAIRE DES DESSINS

D'autres objets et avantages de l'invention apparaîtront plus en détail à la lecture de la description qui suit en référence aux dessins annexés, donnés à titre d'exemples illustratifs et non limitatifs dans lesquels :
- La figure 1 montre selon une coupe transversale simplifiée un exemple de friteuse électrique conforme à l'invention.
- La figure 2 représente selon une vue de dessus l'appareil de chauffe conforme à l'invention.

### MEILLEURE MANIERE DE REALISER L'INVENTION

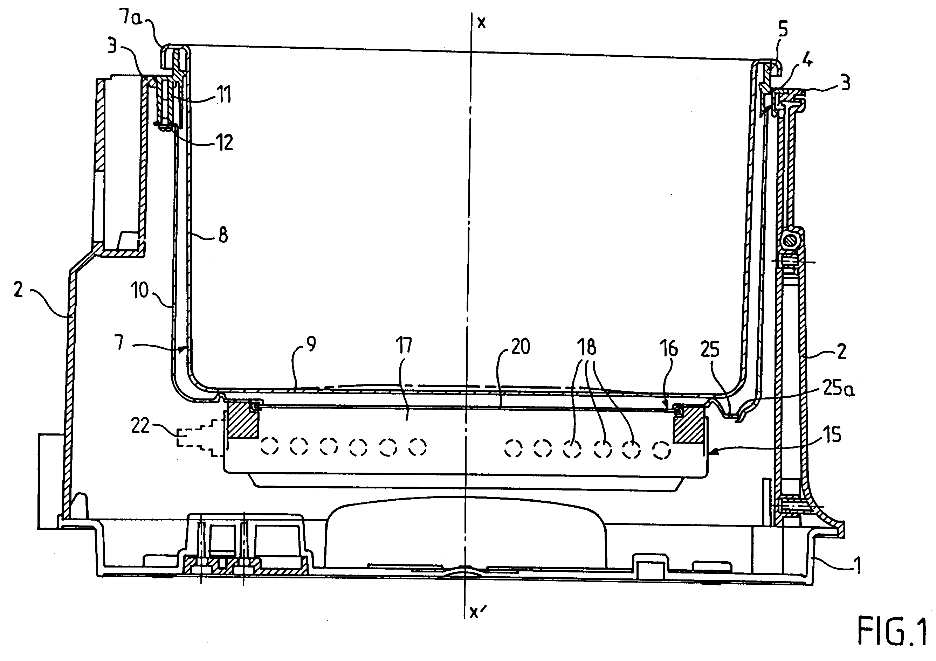

Dans l'exemple de réalisation préférentielle montrée à la figure 1, l'appareil de chauffe pour aliments conforme à l'invention est constitué d'une friteuse électrique comportant une embase 1 sur laquelle est rapportée une jupe externe 2 formant l'enveloppe externe de la friteuse. La jupe externe 2 est, de manière classique, réalisée de préférence en un matériau plastique bon marché et peu résistant à la chaleur, tel que du polypropylène, ne résistant pas à l'énergie thermique dissipée en continu par un élément chauffant haute température classiquement utilisé dans les friteuses électriques.

La partie supérieure 3 de la jupe externe 2 est solidaire d'une bague annulaire 4 montée en appui et en porte à faux sur la jupe externe 2. De manière classique, la bague annulaire 4 est par exemple fixée par clipsage sur le rebord interne de la jupe externe 2, et elle comporte une nervure verticale s'étendant sur toute sa périphérie ou une série de pions verticaux 5 répartis régulièrement à la périphérie de la bague annulaire 4. Cette dernière est avantageusement réalisée en un matériau thermiquement isolant résistant en continu aux températures d'utilisation de la friteuse, par exemple en polyamide, en polyester, ou en PBTP.

La friteuse électrique comporte également une cuve 7 réalisée en un matériau métallique, montée de manière amovible sur les pions 5 par l'intermédiaire d'un bord roulé 7a selon une direction radiale externe en considération de l'axe longitudinal x-x'. La cuve 7 définit des parois latérales 8 s'étendant à distance de la jupe externe 2 et un fond 9 avantageusement bombé de manière à présenter sa face convexe en direction de l'intérieur de la cuve 7, afin de réduire les déformations.

Le montage de la cuve 7 sur la bague annulaire 4 à distance de la jupe externe 2 afin de laisser une couche d'air suffisamment épaisse pour limiter les températures de la jupe externe 2 à une valeur compatible avec la tenue thermique de la matière plastique de cette jupe est avantageusement en tous points conforme au brevet du demandeur EP-A-0.295.159, dont la description est ici incorporée dans la présente demande.

Selon une caractéristique essentielle de l'invention, la friteuse électrique comporte une contre-cuve 10, réalisée avantageusement en un matériau métallique, enveloppant sur toutes ses faces la cuve 7 dans l'espace compris entre cette dernière et la jupe externe 2 et au moins sur une partie de la hauteur des parois latérales 8 et au moins sur une partie du fond 9. La contre-cuve 10 s'étend par conséquent à distance des parois latérales 8 et du fond 9, et ceinture donc la cuve 7 de manière préférentielle sur toute sa hauteur. La contre-cuve 10 est avantageusement fixée sur la bague annulaire 4 et supportée par cette dernière à distance de la cuve 10 et de la jupe externe 2. La fixation de la contre-cuve 10 est obtenue par exemple par vissage de ladite contre-cuve 10 sur la bague annulaire 4. A cette fin il est prévu avantageusement une série de quatre trous taraudés 11 ménagés dans la bague annulaire 4 et répartis angulairement de manière régulière afin de permettre le passage de quatre vis de fixation 12 pour assurer l'assemblage de la contre-cuve 10 sur la bague annulaire 4.

La friteuse conforme à l'invention comporte également des moyens de chauffe 15 montés fixes sur la contre-cuve 10. Selon une version préférentielle de l'invention, les moyens de chauffe 15 sont directement solidaires de la contre-cuve 10 et supportés par cette dernière à distance du fond 9 de la cuve 7. Avantageusement les moyens de chauffe sont montés sous la contre-cuve 10 au droit du fond 9 et d'une ouverture 16 ménagée dans la contre-cuve 10. L'ouverture 16 est par exemple d'une surface légèrement inférieure à la surface du fond 9, et par exemple de forme circulaire, alors que les moyens de chauffe 15 sont constitués d'une masse en matériau réfractaire 17 dans laquelle s'étend une résistance chauffante 18, par exemple sous une forme géométrique spiralée. Pour éviter un accès direct à la résistance chauffante 18 incandescente, la contre-cuve 10 est pourvue d'une grille de protection 20 s'étendant sur l'ouverture 16 et fixée, par exemple par sertissage, directement sur la plaque constituant le fond de la contre-cuve 10.

Dans une variante de réalisation de la friteuse conforme à l'invention, la grille de protection 20 peut être remplacée par tout élément de protection constitué d'un matériau perméable aux rayonnements thermiques. L'élément de protection est par exemple une vitre.

Les moyens de chauffe 15 comportent de manière classique un bloc de connexion électrique 22 relié à un câblage électrique non représenté à la figure 1.

Selon une version préférentielle de l'invention la contre-cuve 10 comporte une gouttière antidébordement 25 ménagée dans sa plaque de fond, de préférence à sa périphérie. Une telle gouttière permet de canaliser et d'évacuer un éventuel écoulement de liquide le long des parois internes de la contre-cuve 10 et évite ainsi tous risques de pollution ou d'inflammation d'un liquide pouvant tomber accidentellement sur les moyens de chauffe 15.

Avantageusement la gouttière antidébordement 25 est pourvue de trous d'écoulement 25a, lesquels permettent de canaliser d'éventuels liquides vers des parties de la friteuse n'entrant pas en contact avec les moyens de chauffe 15.

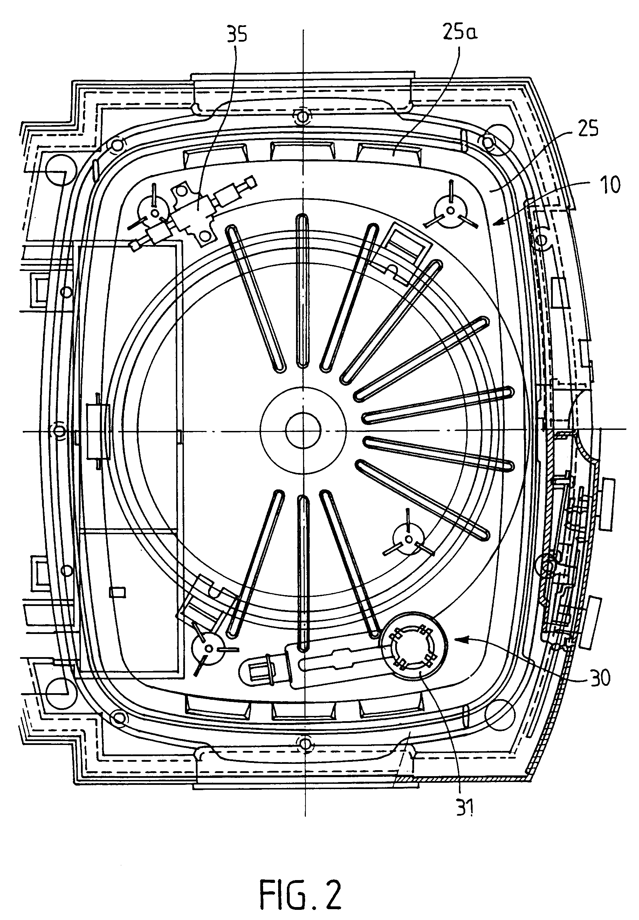

Selon une autre variante de réalisation montrée à la figure 2, la friteuse électrique conforme à l'invention comporte des moyens de régulation thermique 30 fixés sur la contre-cuve 10. Les moyens de régulation thermique comprennent un capteur 31, de type CTN, en appui élastique sur le fond 9 lorsque la cuve 7 est en position de cuisson, c'est à dire repose en appui sur la bague annulaire 4. Selon une variante de réalisation preférentielle, le capteur 31 est monté sur un support palpeur qui est clipsé sur la contre-cuve 10. Les moyens de régulation thermique 30 sont associés également à un fusible thermique 35 fixé sur la contre-cuve 10.

Le fusible thermique 35 est par exemple serti sur la contre-cuve 10.

Selon une variante de réalisation de la friteuse électrique conforme à l'invention, les moyens de régulation 30 comprennent le capteur 31 et le fusible thermique 35.

A titre de variante de réalisation il est bien évidemment possible d'avoir recours à une contre-cuve 10 dont la hauteur des parois latérales est inférieure à la hauteur des parois latérales 8 de la cuve 7. Dans ce cas la contre-cuve 10 n'est plus fixée par vissage sur la bague annulaire 4, mais par tous moyens appropriés directement sur la jupe externe 2 ou indirectement sur un moyen supplémentaire d'appui et de support fixé sur la jupe externe 2.

Avantageusement, la cuve 7 est noircie extérieurement par un produit du type laque pour augmenter la capacité d'absorption par rayonnement.

La cuve 7 est recouverte intérieurement par un revêtement anti-adhésif ou inox.

Le fonctionnement de la friteuse électrique conforme à l'invention est le suivant.

L'utilisateur après avoir versé l'huile nécessaire à la friture dans la cuve 7 met l'appareil sous tension. Lorsque la température de friture est atteinte, au besoin signalée par un voyant lumineux, l'utilisateur procède à la friture proprement dite en versant les aliments à cuire dans le bain d'huile. La structure de la friteuse conforme à l'invention permet aux moyens de chauffe 17, 18 d'assurer par rayonnement la chauffe de l'huile et la cuisson des aliments, alors que la contre-cuve 10 associée à la jupe externe 2 assure un bon écran thermique et une bonne isolation thermique. Ainsi il s'avère que les températures atteintes au niveau de la masse réfractaire 17 sont de l'ordre de 450°C alors que les températures atteintes sensiblement à mi-hauteur de la cuve 7 sont de l'ordre de 160°C et que les températures atteintes dans le bas de la contre-cuve 10 sont de l'ordre de 230°C. Au niveau de la jonction entre la contre-cuve 10 et la bague annulaire 4 les températures atteintes sont de l'ordre de 150°C, alors que les températures atteintes sur la face inférieure de la masse réfractaire en regard de l'embase 1 sont de l'ordre de 270°C. Au total il s'avère que la structure de la friteuse conforme à l'invention permet une maîtrise optimale de la montée en température de l'ensemble des zones de l'appareil tout en permettant un chauffage optimal de la cuve 7. La contre-cuve 10 assume à la fois une fonction de protection visuelle de l'intérieur de la friteuse en particulier de la jupe externe 2, tout en assurant une bonne isolation thermique vers l'extérieur de l'appareil. En outre la contre-cuve 10 assume la fonction de maintien des moyens de chauffe et sert à la fixation des moyens de régulation thermique. L'utilisateur peut ainsi disposer des avantages d'une cuve amovible de friture qui peut être utilisée comme récipient de cuisson d'appoint, sans limiter les performances et la sécurité d'utilisation de l'appareil.

### POSSIBILITES D'APPLICATION INDUSTRIELLE

L'invention trouve son application industrielle dans la fabrication d'appareils de cuisson d'aliments par immersion dans un bain d'huile, et en particulier dans la fabrication de friteuses électriques.

## Revendications

1. Friteuse comprenant une cuve (7) montée amovible, et entourée à distance par une jupe externe (2), des moyens de chauffe (15, 17, 18) disposés sous la cuve (7), et des moyens de régulation thermique (30) de la chauffe, caractérisée en ce qu'elle comporte une contre-cuve (10), enveloppant la cuve (7) au moins partiellement sur toutes ses faces, ladite contre-cuve (10) étant montée à distance entre la cuve (7) et la jupe externe (2) d'une part, les moyens de chauffe (15, 17, 18) étant montés fixes sur la contre-cuve (10) d'autre part.

2. Friteuse selon la revendication 1, caractérisée en ce que les moyens de chauffe (17, 18) sont solidaires de la contre-cuve (10) et supportés par cette dernière à distance du fond (9) de la cuve (7).

3. Friteuse selon la revendication 2, caractérisée en ce que les moyens de chauffe (17, 18) sont montés sous la contre-cuve (10), au droit du fond (9) de la cuve et d'une ouverture (16) ménagée dans la contre-cuve (10).

4. Friteuse selon la revendication 3, caractérisée en ce que la contre-cuve (10) est pourvue d'une grille (20) de protection s'étendant sur l'ouverture (16).

5. Friteuse selon l'une des revendications 1 à 4, caractérisée en ce que les moyens de chauffe sont constitués d'une résistance chauffante (18) s'étendant dans la masse d'un matériau réfractaire (17).

6. Friteuse selon l'une des revendications 1 à 5, caractérisée en ce que la contre-cuve (10) est métallique.

7. Friteuse selon l'une des revendications 1 à 6, caractérisée en ce que la contre-cuve (10) ceinture la cuve (7) sensiblement sur toute sa hauteur.

8. Friteuse selon l'une des revendications 1 à 7, caractérisée en ce que la contre-cuve (10) comporte une gouttière antidébordement (25) ménagée à la périphérie de sa plaque de fond, ladite gouttière antidébordement (25) étant pourvue d'au moins un trou d'écoulement (25a).

9. Friteuse selon l'une des revendications 1 à 8, caractérisée en ce que la cuve (7) est supportée de manière amovible sur la jupe externe (2) par une bague annulaire (4) elle-même en appui sur la jupe externe (2).

10. Friteuse selon les revendications 7 et 9, caractérisée en ce que la contre-cuve (10) est fixée sur la bague annulaire (4) et supportée par cette dernière à distance de la cuve (7) et de la jupe externe (2).

11. Friteuse selon l'une des revendications 1 à 10, caractérisée en ce que les moyens de régulation thermique (30) sont fixés sur la contre-cuve (10).

12. Friteuse selon la revendication 11, caractérisée en ce que les moyens de régulation thermique (30) comprennent un capteur (31), de type CTN, en appui élastique sur le fond (9) de la cuve (10) lorsque cette dernière est en position de cuisson.

13. Friteuse selon la revendication 11 ou 12, caractérisée en ce que les moyens de régulation thermique (30) sont associés à un fusible thermique (35) fixé sur la contre-cuve (10).

## Claims

1. A deep fryer including a removably mounted bowl (7) surrounded at a distance by an outer skirt (2), heater means (15, 17, 18) disposed under the bowl (7), and temperature regulator means (30) for regulating the heating temperature, said deep fryer being characterized in that it includes a backing bowl (10) encasing the bowl (7) over at least a portion of each of its faces, said backing bowl (10) being mounted at a distance between the bowl (7) and the outer skirt (2), and the heater means (15, 17, 18) being mounted in fixed manner on the backing bowl (10).

2. A deep fryer according to claim 1, characterized in that the heater means (17, 18) are secured to the backing bowl (10) and supported thereby at a distance from the bottom (9) of the bowl (7).

3. A deep fryer according to claim 2, characterized in that the heater means (17, 18) are mounted under the backing bowl (10) facing the bottom (9) of the bowl and facing an opening (16) provided through the backing bowl (10).

4. A deep fryer according to claim 3, characterized in that the backing bowl (10) is provided with a protective grating (20) extending over the opening (16).

5. A deep fryer according to any one of claims 1 to 4, characterized in that the heater means are constituted by at heater resistor (18) extending in a mass of refractory material (17).

6. A deep fryer according to any one of claims 1 to 5, characterized in that the backing bowl (10) is made of metal.

7. A deep fryer according to any one of claims 1 to 6, characterized in that the backing bowl (10) girdles the bowl (7) substantially over the entire height thereof.

8. A deep fryer according to any one of claims 1 to 7, characterized in that the backing bowl (10) is provided with an overflow gutter (25) provided in the periphery of its bottom plate and provided with at least one drain hole (25a).

9. A deep fryer according to any one of claims 1 to 8, characterized in that the bowl (7) is supported in removable manner on the outer skirt (2) by an annular ring (4) itself resting on the outer skirt (2).

10. A deep fryer according to claims 7 and 9, characterized in that the backing bowl (10) is fixed to the annular ring (4) and supported thereby at a distance from the bowl (7) and at a distance from the outer skirt (2).

11. A deep fryer according to any one of claims 1 to 10, characterized in that the temperature regulator means (30) are fixed to the backing bowl (10).

12. A deep fryer according to claim 11, characterized in that the temperature regulator means (30) comprise a sensor (31) of the negative temperature coefficient type that is urged resiliently against the bottom (9) of the bowl (10) when said bowl is in the cooking position.

13. A deep fryer according to claim 11 or 12, characterized in that the temperature regulator means (30) are associated with a temperature fuse (35) fixed to the backing bowl (10).

## Patentansprüche

1. Friteuse, mit einer Wanne (7), die abnehmbar angebracht und von einer äußeren Verkleidung (2) beabstandet umgeben ist, Heizmitteln (15, 17, 18), die unter der Wanne (7) angeordnet sind, und Mitteln (30) zur Wärmeregelung des Heizens, dadurch gekennzeichnet, daß sie eine Gegenwanne (10) aufweist, die die Wanne (7) mindestens teilweise an allen ihren Flächen ummantelt, wobei die Gegenwanne (10) zwischen der Wanne (7) und der äußeren Verkleidung (2) einerseits beabstandet angebracht ist und die Heizmittel (15, 17, 18) an der Gegenwanne (10) andererseits fest angebracht sind.

2. Friteuse nach Anspruch 1, dadurch gekennzeichnet, daß die Heizmittel (17, 18) mit der Gegenwanne (10) fest verbunden und durch diese vom Boden (9) der Wanne (7) beabstandet getragen sind.

3. Friteuse nach Anspruch 2, dadurch gekennzeichnet, daß die Heizmittel (17, 18) unter der Gegenwanne (10) in der Senkrechten des Bodens (9) der Wanne und einer in der Gegenwanne (10) ausgesparten Öffnung (16) angebracht sind.

4. Friteuse nach Anspruch 3, dadurch gekennzeichnet, daß die Gegenwanne (10) mit einem Schutzgitter (20) versehen ist, das sich über der Öffnung (16) erstreckt.

5. Friteuse nach einem der Ansprüche 1 bis 4, dadurch gekennzeichnet, daß die Heizmittel aus einem Heizwiderstand (18) gebildet sind, der sich in der Masse eines feuerfesten Materials (17) erstreckt.

6. Friteuse nach einem der Ansprüche 1 bis 5, dadurch gekennzeichnet, daß die Gegenwanne (10) aus Metall ist.

7. Friteuse nach einem der Ansprüche 1 bis 6, dadurch gekennzeichnet, daß die Gegenwanne (10) die Wanne (7) im wesentlichen auf ihrer gesamten Höhe umfaßt.

8. Friteuse nach einem der Ansprüche 1 bis 7, dadurch gekennzeichnet, daß die Gegenwanne (10) eine Überlaufverhindungsrinne (25) aufweist, die im Umfang ihrer Grundplatte ausgespart ist, wobei die Überlaufverhinderungsrinne (25) mit mindestens einem Sickerloch (25a) versehen ist.

9. Friteuse nach einem der Ansprüche 1 bis 8, dadurch gekennzeichnet, daß die Wanne (7) auf abnehmbare Weise auf der äußeren Verkleidung (2) durch einen kreisförmigen Ring (4) getragen ist, der selbst auf der äußeren Verkleidung (2) in Anlage ist.

10. Friteuse nach Anspruch 7 und 9, dadurch gekennzeichnet, daß die Gegenwanne (10) am kreisförmigen Ring (4) befestigt und von diesem beabstandet von der Wanne (7) und der äußeren Verkleidung (2) getragen ist.

11. Friteuse nach einem der Ansprüche 1 bis 10, dadurch gekennzeichnet, daß die Mittel (30) zur Wärmeregelung an der Gegenwanne (10) befestigt sind.

12. Friteuse nach Anspruch 11, dadurch gekennzeichnet, daß die Mittel (30) zur Wärmeregelung einen Fühler (31), vom Typ mit negativem Temperaturkoeffizient, in elastischer Anlage auf dem Boden (9) der Wanne (10) aufweisen, wenn diese in Garposition ist.

13. Friteuse nach Anspruch 11 oder 12, dadurch gekennzeichnet, daß die Mittel (30) zur Wärmeregelung mit einer thermischen Sicherung (35) verbunden sind, die an der Gegenwanne (10) befestigt ist.
